# EUROPEAN PATENT APPLICATION

(11) **EP 2 523 111 A1**
(43) Date of publication of application: **14.11.2012**
(21) Application number: 11166074.2
(22) Date of filing: 13.05.2011
(51) Int. Cl.: G06F 9/50

(54) **Allocating media decoding resources according to priorities of media elements in received data**

(71) Applicant: Research In Motion Limited, Waterloo, ON N2L 3W8 (CA)
(72) Inventor: Staikos, George Ross, Toronto Ontario M4P 3A2 (CA); Staikos, Matthew Nicholaos, Toronto Ontario M4P 3A2 (CA); Gammon, Scott Peter, Waterloo Ontario N2L 3W8 (CA)
(74) Representative: Roberts, Gwilym Vaughan

(57) **Abstract**

An electronic device (100) receives a web page having multiple media elements. Respective priorities are assigned to the multiple media elements. Media decoding resources (212) are allocated to the media elements according to the assigned priorities.

## Description

### Background

A web page that is received by an electronic device for rendering can include various different elements. Examples of such elements include a Flash element (containing Flash content), an applet element (*e.g*. Java applet element), or a script element (*e.g*. a JavaScript element). Rendering rich media content associated with certain types of elements (such as those listed above) can be resource-intensive. If the rich media content associated with multiple elements have to be rendered concurrently, then performance in displaying such rich media content can suffer if resources of the electronic device become overloaded.

### Summary

In general, according to some embodiments, a method includes parsing data to identify a plurality of media elements to render. The plurality of media elements are prioritized such that a first of the media elements is assigned a higher priority and a second of the media elements is assigned a lower priority. Media decoding resources of the electronic device are allocated based on priorities assigned during the prioritizing, wherein the allocating comprises allocating a first of the media decoding resources for processing the first media element and a second of the media decoding resources for processing the second media element.

Other or alternative features will become apparent from the following description, from the claims, or from the drawings.

### Brief Description Of The Drawings

Some embodiments are described with respect to the following figures:
Fig. 1 illustrates an example network arrangement including various entities in a network;
Fig. 2 is a block diagram of an electronic device that provides a scheduling mechanism to allocate media decoding resources for processing media elements, in accordance with some implementations;
Fig. 3 is a block diagram of an electronic device that includes multiple decoders that are allocatable to media elements, in accordance with some implementations;
Fig. 4A illustrates an example rendered web page, according to an example;
Fig. 4B illustrates markup language code for causing display of the web page of Fig. 4A, according to an example;
Fig. 5 is a flow diagram of a process of rendering data having multiple media elements, in accordance with some embodiments;
Figs. 6 and 7 are block diagrams of components of electronic devices according to various embodiments;
Fig. 8 illustrates a displayed web page and indications of factors for assigning higher priority to a particular media element, according to some examples; and
Fig. 9 illustrates further details relating to prioritizing of multiple media elements of a web page, according to some embodiments.

### Detailed Description

A web page can include various types of elements, including text elements, image elements, audio elements, video elements, multimedia elements, and so forth. A multimedia element refers to an element that is associated with some combination of the following types of content: audio content, image content, video content, and text content. The processing of certain types of elements of a web page, especially richer elements such as audio elements, video elements, and multimedia elements, can involve use of media decoding resources (such as audio/video decoding resources). In the ensuing discussion, an element of a web page (or other input data to be rendered) that has to be processed by a media decoding resource prior to rendering of such element is referred to as a "media element."

Note that a media element is considered to be part of a web page (or other input data) if respective tags and a reference (such as a pointer or link) to the content of the media element is contained in the web page (or other input data). In other words, the actual content corresponding to the media element does not have to be embedded in the web page (or other input data) for the media element to be considered part of the web page (or other input data).

If multiple media elements have to be processed at the same time, the media decoding resources of the electronic device may become overloaded. In some examples, a web page can include a first media element that corresponds to a multimedia advertisement, and a second media element that corresponds to actual content that is of interest to the user (*e.g*., game content, a movie, etc.). In the ensuing discussion, such actual content of interest to a user is referred to as "user content."

If each of the above media elements (advertisement and user content) were treated with equal priority, then if the media decoding resources of the electronic device become overloaded, the user may experience reduced performance when interacting with the user content. For example, if the user content is game content, then the quality of the game experience can be degraded as media decoding resources of the electronic device are also concurrently being consumed for rendering the advertisement.

In accordance with some embodiments, different priorities are assigned to different media elements of a web page (or other input data). The allocation of media decoding resources to process the media elements can be according to the assigned priorities. The media decoding resources can include different types of media decoders (*e.g*. audio/video decoders), such as a hardware media decoder, a hardware-assisted software media decoder, and a software media decoder. The hardware media decoder generally has better performance than the software media decoder, while the hardware-assisted software media decoder has a performance that falls between the performances of the hardware media decoder and the software media decoder.

In some examples, a media decoder can include a decoder to process data encoded according to an MPEG (Moving Pictures Experts Group) format. Different versions of the MPEG format are defined by various different standards promulgated by the ISO/IEC Moving Pictures Experts Group. In other examples, a media decoder can process data encoded according to other formats.

In accordance with some embodiments, when there is competition for the media decoders for processing content associated with different media elements of a web page (or other input data), the priorities of the media elements are used to assign a higher-performance media decoder to a higher priority media element, and to assign a lower-performance media decoder to a lower priority media element. For example, user content would be assigned a higher priority than advertisement content, so that user experience in interacting with the user content would not be degraded due to concurrent processing of the advertisement content.

In alternative embodiments, different media decoding resources of an electronic device can further include different instances of a particular media decoder, such as a software media decoder. The different instances of the particular media decoder can be used to process respective media elements.

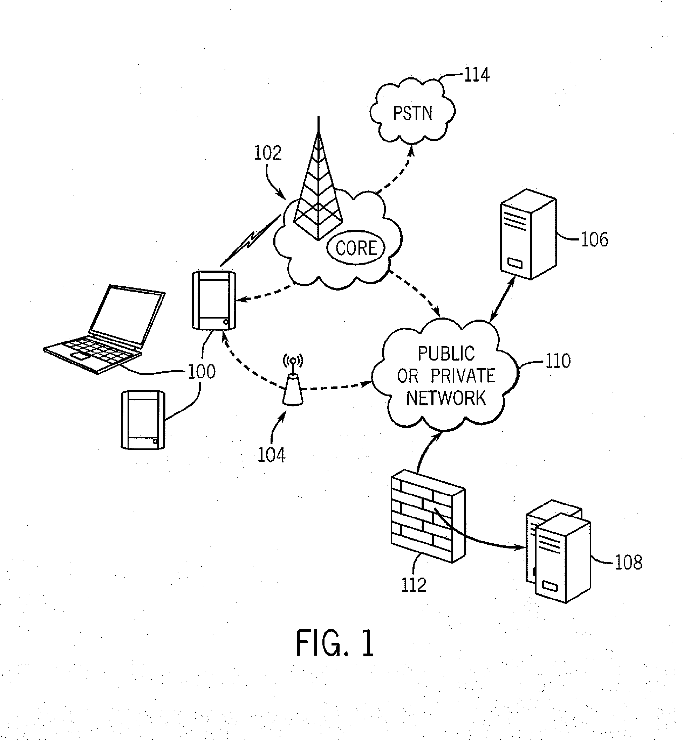

Fig. 1 illustrates an example network arrangement that includes electronic devices 100 that are coupled over wireless access networks (represented generally as 102 and 104) to allow the electronic devices 100 to communicate with remote systems 106 and 108 (*e.g*. various servers such as web servers, electronic mail servers, etc.). The wireless access network 102 can be a cellular wireless access network, while the wireless access network 104 can be a WiFi access network or other type of wireless local area network, as examples. Although the electronic devices 100 are shown coupled to wireless access networks, note that in alternate examples, at least some of the electronic devices 100 can also be coupled to wired networks.

The remote system 106 is connected to a public or private network 110, while the remote systems 108 are coupled to the public or private network 110 through a firewall 112. There can also be various remote systems coupled to a public switched telephone network (PSTN) 114 with which the electronic devices 100 can communicate.

The remote systems 106 and 108 (or other systems not shown) are capable of delivering data to the electronic devices 100. Moreover, the electronic devices 100 are also able to communicate data with each other.

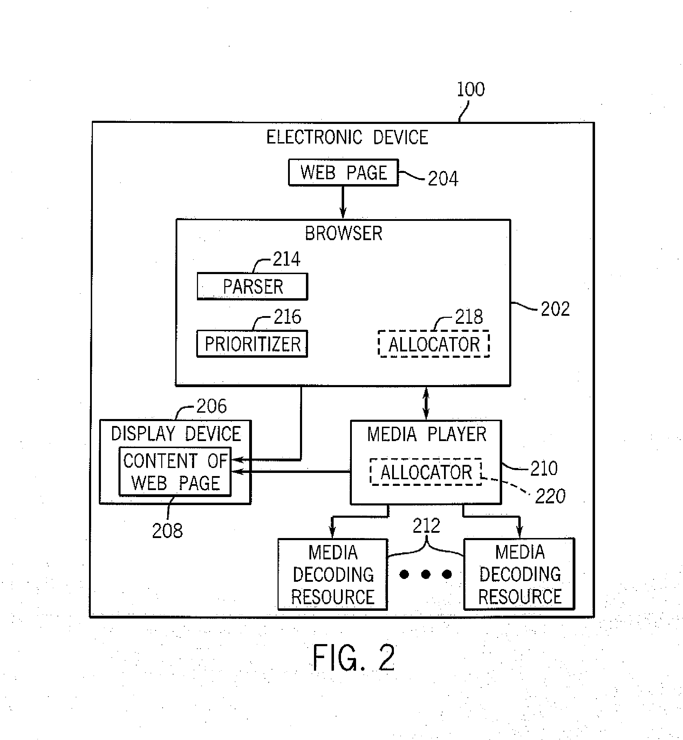

Fig. 2 depicts example components in an electronic device 100. The electronic device 100 includes a browser 202 (sometimes referred to as a web browser) that is able to render a web page 204 received by the electronic device 100 (such as from a remote system 106 or 108 or from another source). The web page 204 can be displayed by the browser 202 in a display device 206 of the electronic device 100. The displayed content of the web page 204 is represented as 208 in Fig. 2.

The electronic device 100 further includes a media player 210, which can cooperate with the browser 202 to display certain media elements of the web page 204. As an example, the media player 210 can be a Flash^{®} player, or other type of player configured to play (render) audio content, video content, multimedia content, or any other content according to a predefined format. A Flash^{®} player is configured to cooperate with the browser 202 to render Flash content, which adds animation, video, and interactivity to web content. Although just one media player 210 is shown in Fig. 2, note that the electronic device 100 can alternatively include multiple media players 210 for playing media elements according to different formats.

The media player 210 can be a plug-in module to the browser 202. Alternatively, the media player 210 can be an external module that can be invoked by the browser 202. As yet another example, the media player 210 can be integrated into the browser 202, or alternatively, the functionalities of the media player 210 can be provided by the browser 202.

The electronic device 100 has various media decoder resources 212 that can be employed by the media player 210 to render respective media elements of the web page 204.

As further shown in Fig. 2, the browser 202 includes a parser 214 for parsing the web page 204, which can be according to an HTML (Hypertext Markup Language) format, or other markup language format. In accordance with some embodiments, the browser 202 also includes a prioritizer 216 that is able to prioritize media elements in the web page 204. Prioritizing the media elements of the web page 204 refers to assigning priorities to the media elements. These priorities are used by an allocator (either an allocator 218 in the browser 202 or an allocator 220 in the media player 210) to allocate selective ones of the media decoder resources 212 to respective media elements.

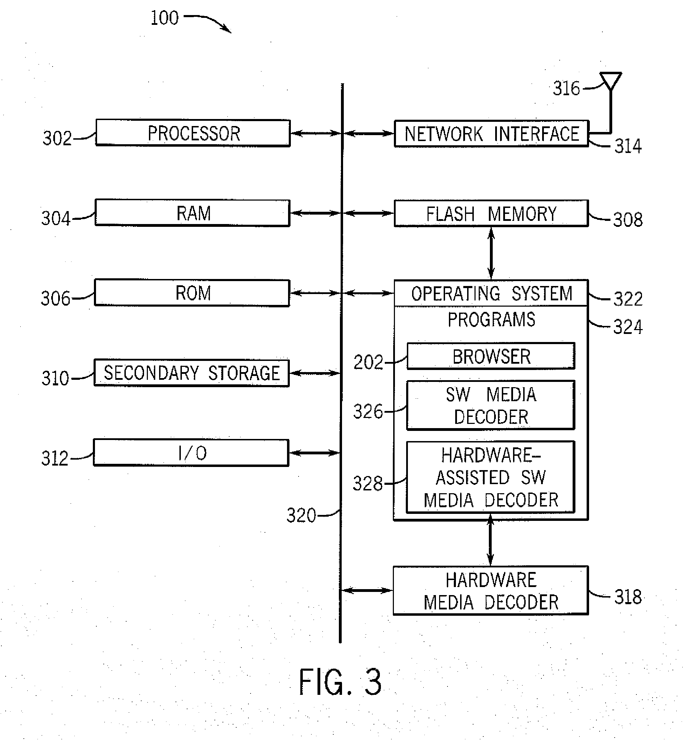

Fig. 3 illustrates further components of the electronic device 100, according to some examples. The electronic device 100 includes a processor 302 (or multiple processors) and various types of storage devices, including a random access memory (RAM) 304, a read-only memory (ROM) 306, a flash memory 308, and a secondary storage device 310, such as a disk-based secondary storage device.

The electronic device also includes one or more input/output (I/O) devices 312 (*e.g*. user input device, I/O port interface, etc.), and a network interface 314 to allow the electronic device 100 to communicate over a network. In some examples, the network interface 314 is connected to an antenna 316 to allow the electronic device 100 to perform wireless communications. Alternatively, the network interface 314 can be configured for wired communications over a wired network.

In addition, the electronic device 100 includes a hardware media decoder 318, which can be implemented with a graphics processing unit (GPU), a digital signal processor (DSP), or other type of hardware processing element. The hardware media decoder 318 can be considered to be a dedicated hardware media decoder 318, since it is dedicated to perform decoding tasks for one media element at a time.

The various hardware components of the electronic device 100 are coupled to an interconnect 320, which can represent one or multiple buses of the electronic device 100. Communications among the hardware components occur over the interconnect 320.

The electronic device 100 also includes an operating system 322, which can be initially stored on the flash memory 308 or on the secondary storage device 310, and loaded for execution on the processor(s) 302. Additionally, other software layers of the electronic device 100 include various programs 324, which can include the browser 202, a software media decoder 326, and a hardware-assisted software media decoder 328. The software media decoder 326 is executable on the processor(s) 302 to perform media decoding tasks. The hardware-assisted media decoder 328 is also executable on the processor(s) 302, except that the hardware-assisted media decoder 328 can leverage hardware resources (*e.g*., a DSP or other type of hardware processing resource) to enhance media decoding performance.

The software media decoder 326, hardware-assisted software media decoder 328, and hardware media decoder 318 are examples of the media decoder resources 212 shown in Fig. 2.

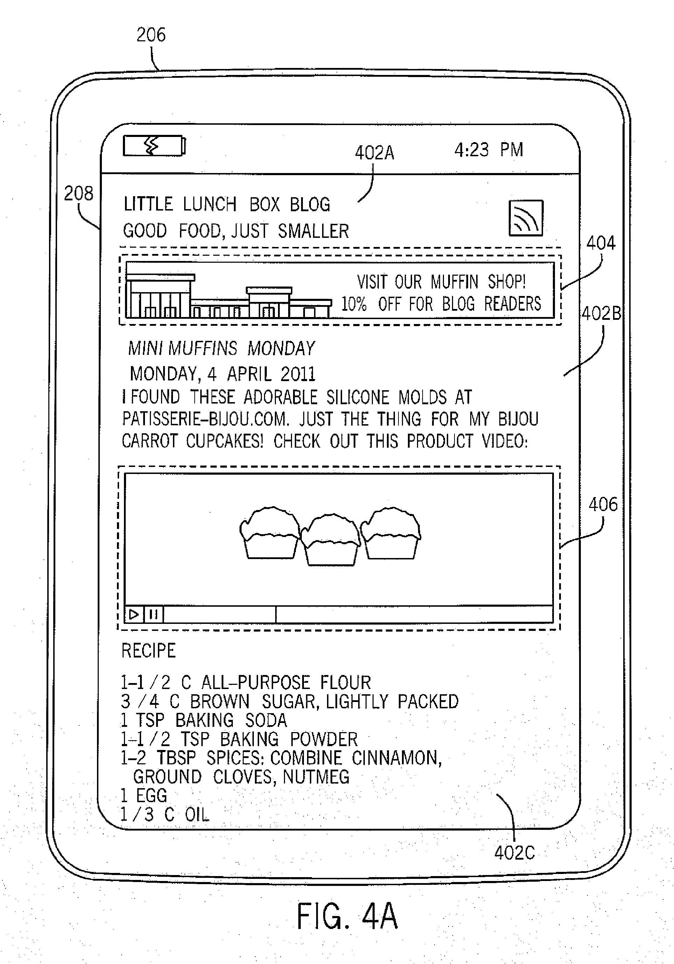

Fig. 4A shows example web page content 208 that can be displayed by the display device 206. The displayed web page content 208 includes various text elements 402A, 402B, and 402C, as well as media elements 404 and 406. As examples, the media elements 404 and 406 can be Flash media elements. The media element 404 includes advertisement content, whereas the media element 406 includes user content that is of interest to the user.

To enhance rendering performance of the user content media element 406, the user content media element 406 is assigned a higher priority than that of the advertisement media element 404 by the prioritizer 216 of the browser 202 (Fig. 2). In the context of the example of Fig. 3, the user content media element 406 can be allocated to the hardware media decoder 318 for decoding, while the advertisement media element 404 can be assigned to the software media decoder 326 or hardware-assisted software media decoder 328 for decoding. As noted above, the hardware media decoder 318 generally has higher performance than either the software media decoder 326 or the hardware-assisted software media decoder 328.

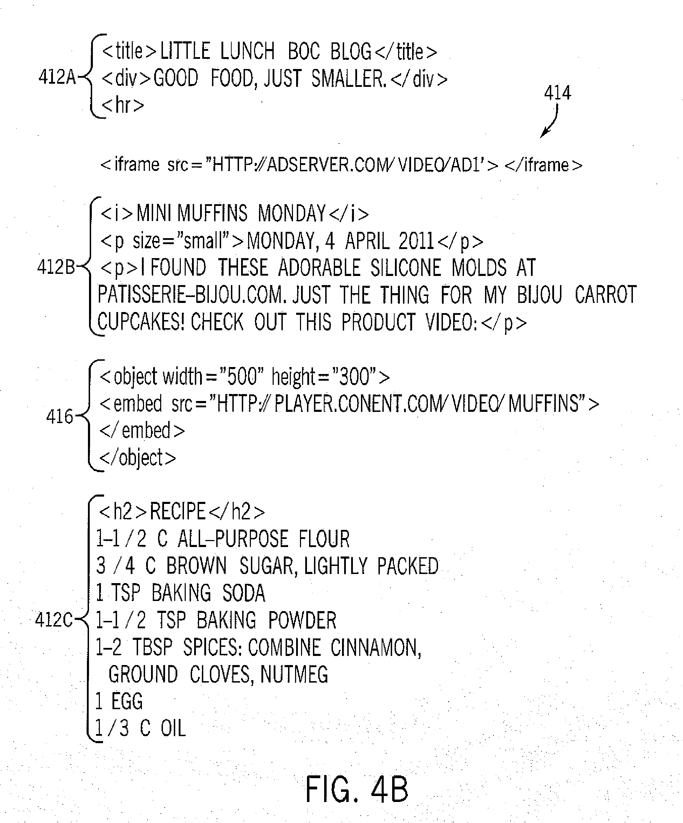

The rendered web page content 208 of Fig. 4A can be defined by HTML code depicted in Fig. 4B, according to some examples. Text elements 402A, 402B, and 402C displayed in Fig. 4A can be defined by respective HTML code portions 412A, 412B, and 412C of Fig. 4B. The HTML code portions 412A, 412B, and 412C include various markup tags as well as the corresponding text to be rendered.

The HTML code of Fig. 4B also includes an HTML code portion 414 for rendering the media element 404 of Fig. 4A. The HTML code portion 414 includes an <iframe> tag that is used to define an inline frame that contains another document, which in this example is a video file referenced by the uniform resource locator (URL) "http://adserver.com/video/ad1".

The HTML code of Fig. 4B further includes an HTML code portion 416 for rendering the media element 406 of Fig. 4A. The HTML code portion 416 includes an <object> tag, which is used to include objects such as an image, audio content, video content, a Java applet, Flash content, and so forth.

Note that in other examples, other tags can be used for defining the media elements 404 and 406 of Fig. 4A. Also, note that the markup tag (<iframe>) used to define the advertisement media element 404 is different from the markup tag (<object>) used to define the user content media element 406. The presence of the markup tag (<iframe>) can be an indication that the corresponding media element includes advertisement content, whereas the presence of the markup tag (<object>) can be an indication that the corresponding media element includes user content. Consequently, the foregoing two tags can be used as patterns in the markup language code to indicate whether the corresponding media element is advertisement content or user content.

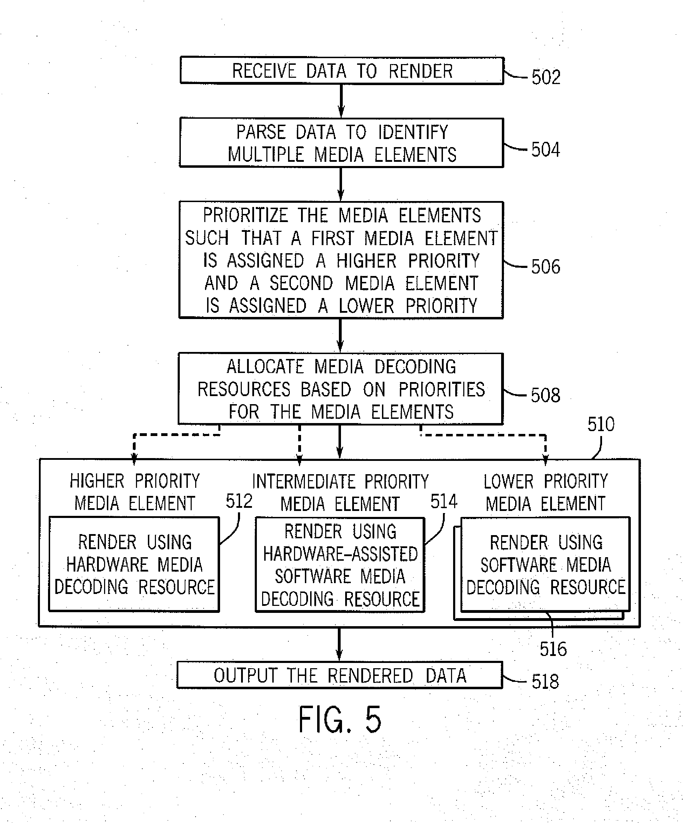

Fig. 5 is a flow diagram of a process of an electronic device 100 according to some embodiments. The browser 202 (Fig. 2) receives (at 502) data to be rendered, which can include the web page 204 of Fig. 2. The parser 214 of the browser 202 parses (at 504) the received data to identify multiple media elements, such as the media elements 404 and 406 (Fig. 4A) corresponding to HTML code portions 414 and 416 (Fig. 4B), respectively.

The prioritizer 216 of the browser 202 prioritizes (at 506) the media elements such that a first media element is assigned a higher priority and a second media element is assigned a lower priority. More generally, the media elements are prioritized such that the multiple media elements are assigned different priorities.

Next, the allocator (218 or 220 of Fig. 2) allocates (at 508) the media decoding resources 212 (Fig. 2) to the media elements based on the priorities assigned to the media elements.

The multiple media elements are rendered (at 510). In the example of Fig. 5, a higher priority media element is rendered (at 512) using a higher priority media decoding resource, such as the hardware media decoder 318 of Fig. 3. An intermediate priority media element is rendered (at 514) using an intermediate media decoding resource, such as the hardware-assisted software media decoder 328 of Fig. 3. A lower priority media element is rendered (at 516) using a lower priority media decoding resource, such as the software media decoder 326 of Fig. 3.

The rendered data is then output (at 518) for display by the display device of the electronic device.

As further shown in Fig. 5, there can be multiple instances of the software media decoding resource 326. Consequently, multiple media elements can be rendered (at 516) using these multiple instances. This can be useful in those scenarios where there are a larger number of media elements in a web page to process than there are number of discrete media decoders (three in the example of Fig. 3). By providing more than one instance of the software media decoder 326, these instances can be used to process respective media elements. The multiple instances of the software media decoder 326 are executable on the processor(s) 302 of Fig. 3.

Also, the multiple instances of the software decoding resources can be assigned individual scheduling priorities in the operating system of the electronic device such that the instances, too, can be used to provide varied quality experiences for different media elements. For example, in a system where only a software media decoder is present (or amongst media elements where only the software media decoder is applicable), the different software decoder instances (having different priorities) can be assigned to the respective media elements. For example, one software decoder instance for processing a first media element can be assigned 20% of the system CPU time, and another software decoder instance for processing a second media element can be assigned 80% of the system CPU time. In other examples, a ratio of CPU time usage can be defined for the different software media decoder instances, since other system operations may have to use some portion of the CPU time as well. This approach can also be applicable to other media decoder types that are capable of multitasking across multiple media elements.

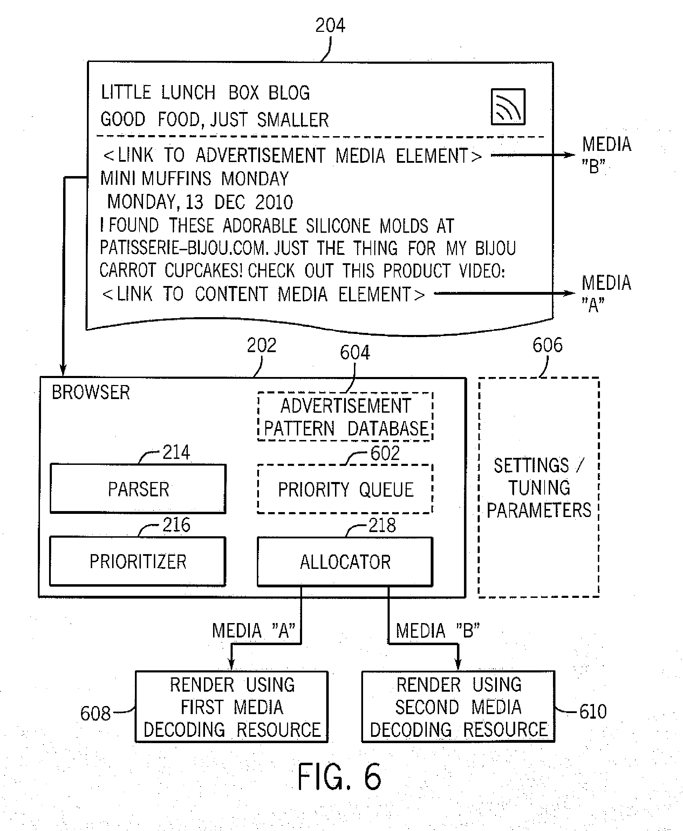

Fig. 6 illustrates rendering of media elements of a web page using an arrangement in which functionalities of the media player 210 (of Fig. 2) are integrated into the browser 202. The browser 202 of Fig. 6 includes the parser 214, prioritizer 216, and allocator 218, as discussed above in connection with Fig. 2. In the implementation of Fig. 6, the media player 210 of Fig. 2 is omitted, and the browser 202 has the capability of rendering the media elements represented as media "A" and media "B" in the web page 204.

In Fig. 6, the browser 202 includes a priority queue 602 to store media elements that are to be rendered. Assuming that there are a certain number of media decoding resources in the electronic device, and that there are a larger number of media elements in the web page 204 than there are media decoding resources, then the priority queue 602 can be used to temporarily store the media elements to be rendered that cannot yet be scheduled for processing by the media decoding resource. The queued media elements can be sorted in an order according to their priorities. As media decoding resources become available, media elements can be retrieved from the priority queue 602 in order of their assigned priorities, and rendered using the available media decoding resources.

Another structure that is depicted in Fig. 6 is an advertisement pattern database 604, which stores various patterns associated with advertisements. The patterns can be patterns found in markup language code corresponding to advertisements. For example, as discussed above, the markup tag (<iframe>) can be a pattern indicating that the corresponding media element contains advertisement content, whereas the markup tag (<object>) can be a pattern indicating that the corresponding media element contains user content.

The markup language code of a web page can be matched to one or more advertisement patterns in the advertisement pattern database 604. Upon detecting a match, the browser 202 can determine that an advertisement media element has been identified and thus will set the priority of such media element accordingly. Although not shown, other pattern databases can be provided for storing patterns in markup language code associated with other types of content, including different types of user content (*e.g*. games, movies, music, etc.).

Settings/tuning parameters 606 can also be associated with the browser 202. This can allow a user or other application to control the setting of priorities of various different types of media elements. For example, the settings/tuning parameter 606 can specify that advertisement media elements are to only be assigned the software media decoder if the software media decoder is available; otherwise, the advertisement media element is not rendered until the software media decoder becomes available. Also, the settings/tuning parameters 606 can specify that certain types of user content media elements (*e.g*. games) are to be assigned higher priority over other types of user content media elements (*e.g*. music).

As further shown in Fig. 6, media "A" of the web page 204 is rendered (at 608) using a first media decoding resource, while media "B" is rendered (at 610) using a second media decoding resource.

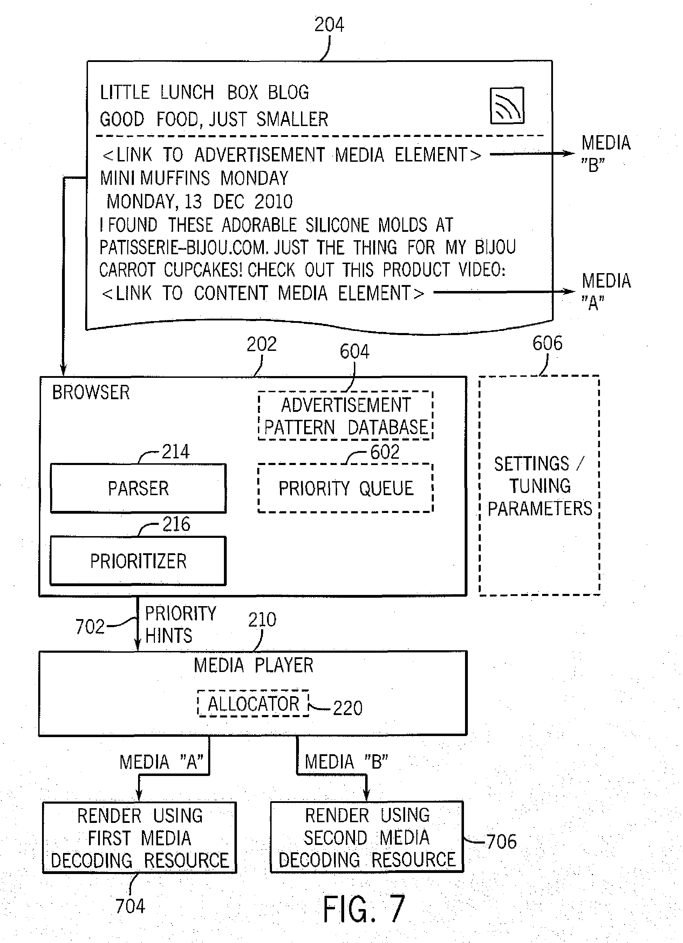

Fig. 7 depicts an arrangement according to alternative implementations. In the arrangement of Fig. 7, the browser 202 is arranged similarly as the browser 202 of Fig. 6, except that the allocator 218 of Fig. 6 is omitted from the browser 202 of Fig. 7. Instead, Fig. 7 shows the browser 202 interacting with the media player 210, which has the allocator 220 for allocating media decoding resources to respective media elements according to respective assigned priorities. In implementations according to Fig. 7, the prioritizer 216 of the browser 202 provides priority hints 702 to the media player 210.

The priority hints 702 can be in the form of indicators associated with respective media elements that are sent from the browser 202 to the media player 210 for rendering. Using the priority hints 702, the allocator 220 of the media player assigns media decoding resources to render respective media elements. In the example of Fig. 7, a first media decoding resource is used to render (at 704) media "A", while a second media decoding resource is used to render (at 706) media "B."

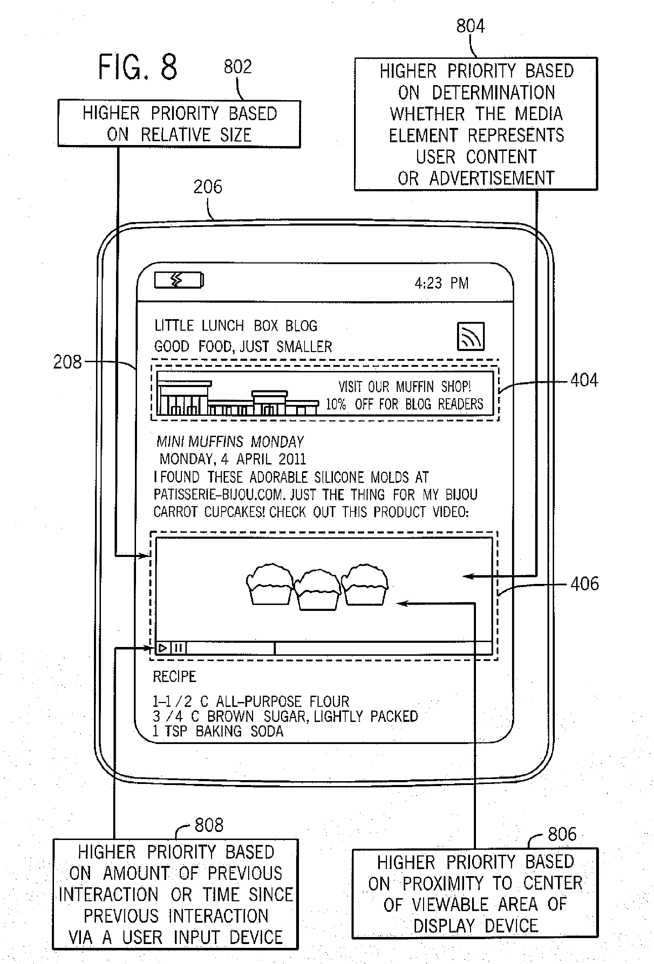

Fig. 8 shows various factors for assigning higher priority to the user content media element 406 over the advertisement media element 404 of the web page content 208 displayed by the display device 206. The factors for assigning higher priority to the user content media element 406 include the following:
- the size of the media element 406 is larger than the size of the media element 404 as shown 802 (a media element of larger size indicates that the associated content is emphasized more than another media element that has a smaller size in the display area);
- a type of the media element 406 indicates that it contains user content as shown in 804 (which is assigned higher priority than advertisement content);
- the media element 406 is closer to the center of the viewable area of the display device 206 as shown in 806 (closer proximity of a media element to the center of the viewable area of the display device indicates that the media element is considered to be of greater significance than another media element that is positioned further away from the center of the viewable area); and
- the user has engaged in a greater amount of interaction or more recent interaction with the media element 406 as shown in 808 (a greater amount of user interaction with the media element via a user input device indicates that the media element is of greater interest to the user, and thus should be assigned a higher priority, and more recent user interaction with the media element via the user input device also indicates that the media element is considered to be of greater interest to the user).

Note that prioritization can be based on a consideration of any one or combination of the foregoing factors.

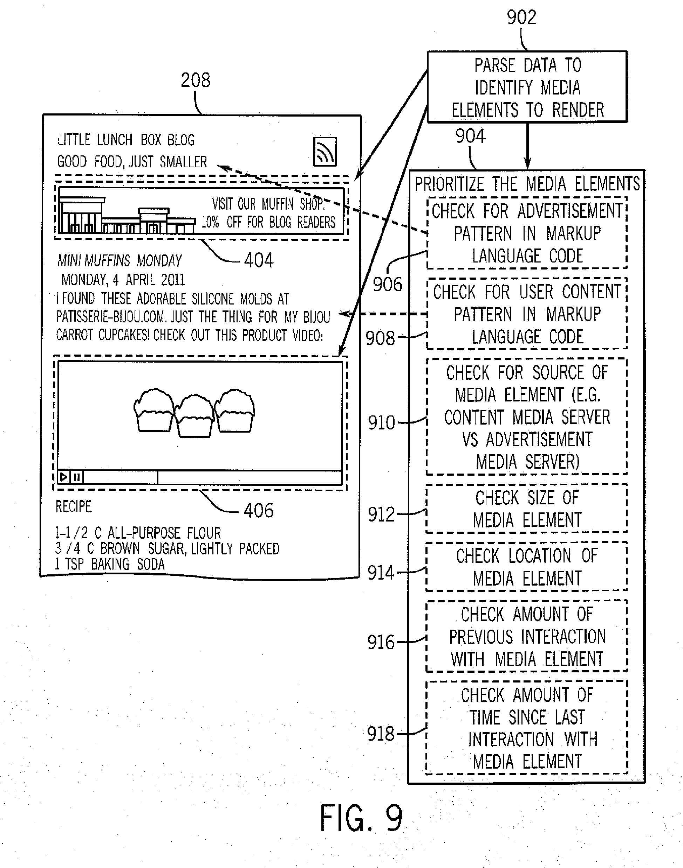

Fig. 9 illustrates a further example for prioritizing media elements of a web page. Input data, such as the web page 204 of Fig. 2, is parsed (at 902) to identify multiple media elements to render. Such media elements are then prioritized (at 904). Prioritizing can include any one or more of the tasks 906-918 shown in Fig. 9.

Task 906 checks for an advertisement pattern in the markup language code. For example, in Fig. 9, the advertisement pattern can include a certain markup tag, such as <iframe>. Task 908 checks for a user content pattern in the markup language code. In the example of Fig. 9, the user content pattern includes a text element right before the user content media element 406. Alternatively, the user content pattern can include a certain type of markup language tag, such as <object>. Task 910 checks for the source of the media element (*e.g*., whether the source is a content media server versus an advertisement media server). For example, the electronic device 100 can include a log of URLs that are known to be advertisement sources. Any subsequently received media element that has a URL matching the log of URLs is indicated as an advertisement media element.

In addition, task 912 checks the size of the media element, task 914 checks the location of the media element, task 916 checks the amount of previous interaction with the media element, and task 918 checks the amount of time since last interaction with the media element.

By using techniques or mechanisms according to some implementations, more effective usage of resources of an electronic device in rendering media elements of a web page can be provided. By assigning higher performance media decoding resources to higher priority media elements, user experience is enhanced.

Machine-readable instructions of various modules described above (such as 202, 210, 214, 216, 218, 220, 326, 328) are executed on a processor or processors (such as 302 in Fig. 3). A processor can include a microprocessor, microcontroller, processor module or subsystem, programmable integrated circuit, programmable gate array, or another control or computing device.

Data and instructions are stored in respective storage devices, which are implemented as one or more computer-readable or machine-readable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In the foregoing description, numerous details are set forth to provide an understanding of the subject disclosed herein. However, implementations may be practiced without some or all of these details. Other implementations may include modifications and variations from the details discussed above. It is intended that the appended claims cover such modifications and variations.

## Claims

1. A method of an electronic device, comprising:
parsing (504) data to identify a plurality of media elements to render;
prioritizing (506) the plurality of media elements such that a first of the media elements is assigned a higher priority and a second of the media elements is assigned a lower priority; and
allocating (508) media decoding resources of the electronic device based on priorities assigned during the prioritizing, wherein the allocating comprises allocating a first of the media decoding resources for processing the first media element and a second of the media decoding resources for processing the second media element.

2. The method of claim 1, wherein allocating the media decoding resources comprises allocating different types of media decoders.

3. The method of claim 2, wherein the different types of media decoders include a hardware media decoder, a hardware-assisted software media decoder, and a software media decoder.

4. The method of any of claims 1-3, wherein the prioritizing is based on relative proximities of the media elements to a center of a viewable area of a display device.

5. The method of any of claims 1-3, wherein the prioritizing is based on relative sizes of the media elements.

6. The method of any of claims 1-3, wherein the prioritizing is based on amounts of user interaction with the media elements.

7. The method of any of claims 1-3, wherein the prioritizing is based on recency of user interaction with the media elements.

8. The method of any of claims 1-3, wherein the prioritizing is based on types of content of the media elements.

9. An article comprising at least a machine-readable storage medium storing instructions that upon execution cause an electronic device to:
receive (502) content to be rendered, wherein the content includes a plurality of media elements;
assign (506) priorities to the plurality of media elements; and
process (510) the plurality of media elements on different ones of media decoding resources according to the assigned priorities.

10. The article of claim 9, wherein assigning the priorities comprises:
identifying a pattern in markup language corresponding to the content, wherein the pattern is related to a first of the plurality of media elements, and wherein the pattern indicates that the first media element is to be assigned a lower priority.

11. The article of claim 10, wherein the pattern is associated with a markup language element used to present an advertisement.

12. The article of claim 10, wherein identifying the pattern comprises:
comparing a portion of the markup language code corresponding to the first media element with a set of patterns.

13. The article of claim 10, wherein assigning the priorities is based on one or more of the following factors: type of content of each media element, size of each media element, location of each media element, amount of user interaction with each media element, and time since last user interaction with each media element.

14. An electronic device (100) comprising:
a network interface (314) to receive a web page having a plurality of media elements;
a plurality of media decoding resources (212);
a prioritizer (216) to assign respective priorities to the plurality of media elements; and
an allocator (218, 220) to allocate different ones of the media decoding resources to the media elements according to the assigned priorities.

15. The electronic device of claim 14, further comprising a browser and a media player, wherein the prioritizer is part of the browser, and the allocator is part of the media player.
